# EUROPEAN PATENT APPLICATION

(11) **EP 2 093 900 A2**
(43) Date of publication of application: **26.08.2009**
(21) Application number: 08103272.4
(22) Date of filing: 31.03.2008
(51) Int. Cl.: H04B 7/185

(54) **Satellite redundancy for critical applications**

(30) Priority: 19.02.2008 US 29716
(71) Applicant: Gilat Satellite Networks, Ltd., 49130 Petah Tikva (IL)
(72) Inventor: Pinchas, Magal, Tel Aviv (IL); Grunberg, Eli Aviram, Herzliya (IL); Hillel, Ronie, Nes Ziona (IL)
(74) Representative: Wallin, Nicholas James

(57) **Abstract**

A system includes a method for automatically reconfiguring a satellite network with a high accuracy in order to enable system reconfiguration very quickly and at a low cost. The system employs a single axis steering mechanism.

## Description

### FIELD

The invention relates to providing suitable satellite reconfiguration facilities for automatically repositioning a VSAT terminal at a low cost upon a change of satellite.

### BACKGROUND

In satellite networks, the remote satellite terminals are usually installed using a fixed satellite dish antenna aligned towards the applicable satellite. If another satellite has to be used for whatever reason, the antenna of each such remote satellite terminal has to be realigned towards the new satellite. As realignment requires each such site to be visited, the process of transferring the entire network to the new satellite may require expensive logistics and considerable time (weeks or even months) to implement even in medium-sized networks (hundreds of remote satellite terminals). That is all the more troublesome for large networks (many thousands of remote satellite terminals) and/or for networks with terminals located in remote and difficult-to-access locations. During the time period of the reconfiguration, remote terminal functionality may be disabled, causing service discontinuity.

### BRIEF SUMMARY

Satellite diversity may enable a remote terminal to use another satellite on a different orbital position without a need for manually re-pointing the antenna. Such capability may be used in several scenarios. One scenario may include recovering from unexpected problems with the satellite itself, such as malfunction of the satellite or even a complete satellite loss. Another scenario may include a planned transfer of the network to a different satellite. Such transfer may be driven from a need to increase the total space segment used by the network (e.g. because of network growth) where that might not be possible over the existing satellite (already fully allocated). Another drive for such transfer may be lowering operation cost, if less expensive space segment can be rented on a different satellite.

Currently, existing products allowing antenna movement over the geostationary orbital arc are used only for receive-only antennas and even then typically only for automated setup scenarios. The invention described herein suggests capabilities for two-way communication systems that may dynamically reconfigure themselves for additional satellite locations.

Each remote site may include an automatic motorized apparatus and a controlling unit. The apparatus may be configured to rotate the antenna towards a pre-defined active satellite. The control unit, which may be incorporated into the remote terminal or externally implemented, may be used both for translating the remote terminal's commands to DisEqC protocol and for enabling an end-user to locally initiate a satellite switchover..

### BRIEF DESCRIPTION OF THE DRAWINGS

FIG. 1 shows a satellite system having a hub and a plurality of remote terminals in accordance with the aspects of the invention.

FIG. 2 shows an embodiment of the invention which may include a VSAT, an externally connected indoor control unit and a polar mount apparatus.

FIG. 3 shows an embodiment of the invention including an additional external control device connected to an auxiliary control interface of the indoor control unit.

FIG. 4 shows an embodiment of an indoor control unit as a unit externally connected to the VSAT.

DETAILED DESCRIPTION

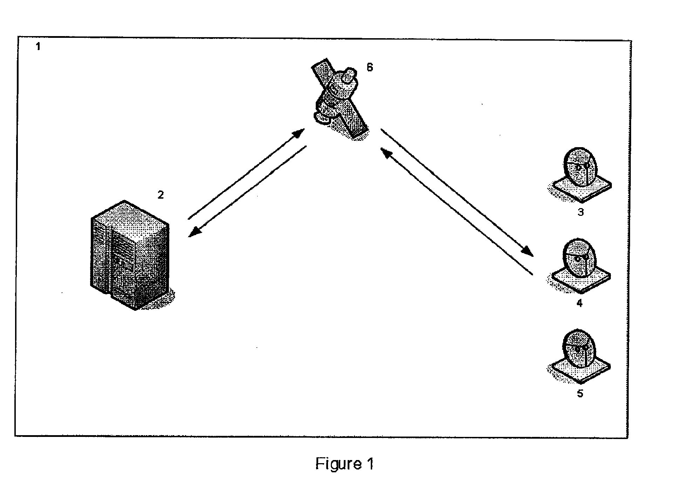

FIG. 1 shows a satellite system 1, having a hub 2 and a plurality of remote terminals 3 to 5 in accordance with the aspects of the invention.

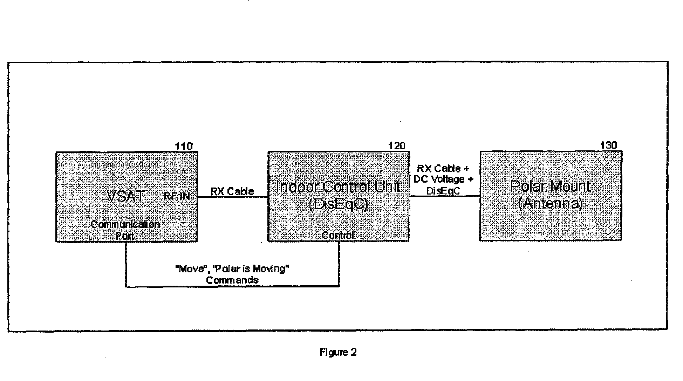

FIG. 2 shows an embodiment of the invention, including a very small aperture terminal (VSAT) 110, an externally connected indoor control unit (ICU) 120 and a polar mount apparatus 130 that may be mounted on or otherwise integrated with the antenna. Other embodiments of this invention may integrate the functionality of indoor control unit 120 into VSAT 110.

VSAT 110 may be used for two-way communication over satellite. VSAT 110 may be connected to an indoor control unit via a communication channel (e.g. RS-232 serial channel, USB bus, or similar communication standard) for the purpose of sending commands and receiving telemetry. ICU 120 may be a device, which communicates satellite positions using DisEqC (digital satellite equipment control) to the polar mount 130. In some embodiments, ICU 120 may also include a suitable mechanism (e.g. control push-buttons) allowing an operator to manually initiate a procedure for repositioning the antenna in order to enable communication via a different satellite. Polar mount 130 may be an automatic motorized apparatus for rotating the satellite dish around a single axis.

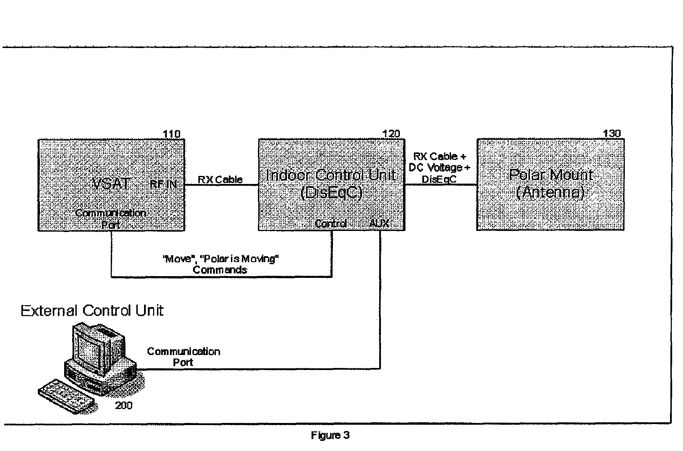

FIG. 3 shows an embodiment of the invention, further including an additional external control device 200 connected to an auxiliary control interface of ICU 120. External control device 200 may be a personal computer, a laptop computer, PDA or any other device with proper communication port and software for sending and receiving commands and telemetry to and from the ICU respectively. ICU 120 may include a mechanism, which enables external control device 200 to monitor the exchange of information between VSAT 110 and ICU 120. Furthermore, ICU 120 may include a mechanism for suppressing any command received via the auxiliary control interface while executing a command received through the main control interface.

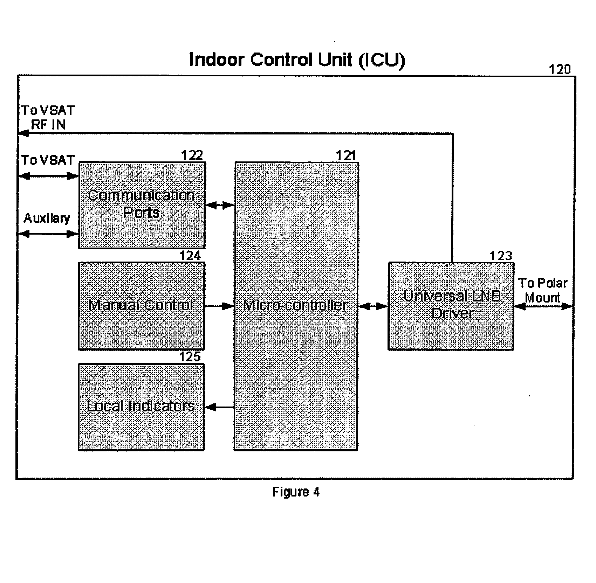

FIG. 4 shows an embodiment of ICU 120 as a unit externally connected to a VSAT. In such embodiment, ICU 120 may contain a micro-controller 121, a communication adaptor 122 (which may be integrated into micro-controller 121) for supporting a main and an auxiliary control channels, and a universal LNB driver 122. In addition, ICU 120 may also contain an option for manual control 124, allowing manual selection of pre-determined antenna positions, and local indicators 125 for purposes such as, but not limited to, indicating which of the pre-defined position is currently in effect and/or that the antenna is currently on the move. The implementation of manual control and local indicators may vary considerably while maintaining similar functionality.

In a satellite communication system having a hub and plurality of remote terminals, two-way communication may be supported. A remote terminal may transmit towards the hub and receive information from the hub via the satellite. In addition, a remote terminal may send information to another remote terminal via the hub. In some embodiments, a remote terminal equipped with a suitable receiver may receive information directly from another terminal in mesh connectivity, i.e. without information being routed via the hub and/or processed by it.

In exemplary satellite communication systems, each remote terminal may include an indoor unit (referred to herein as VSAT), which processes the information sent and received by the remote terminal, a satellite dish antenna, a satellite transmitter and a low-noise block amplifier (LNB), the last two preferably being mounted on the antenna and connected to the indoor unit with appropriate cables. In most cases, the dish antenna lacks any automatic alignment capabilities. The installation procedure of such remote terminal often includes a step of aligning the antenna towards the position of the applicable satellite in the sky. Once installation is complete, any transfer to another satellite requires manual realignment of the antenna, which means revisiting the site where the remote terminal is installed.

Except maybe for the cases where an antenna has to be realigned because of extreme wind gusts or because of the need to relocate the antenna (e.g. as the line of site towards the satellite becomes partially or entirely blocked by new buildings or other interfering objects), the cost and logistics of revisiting sites for antenna realignment may be saved by installing dish antennas with automatic alignment capabilities. While antennas with alignment capabilities over both azimuth and elevation are quite expensive, much less expensive devices, e.g. polar mounts, are capable of rotating a dish antenna over a single axis. These mountings are sometimes used for one-way (receive only) applications.

By using a polar mount device in a two-way communication system, a two-way remote terminal may support automatic realignment of its dish antenna. As polar mount devices may be very accurate, a proper installation and alignment of the antenna towards the geostationary arc not only insures proper reception at every position along the arc but also sufficient transmission conditions, such as cross-polarization isolation.

By aligning the antenna towards the geostationary arc, the remote terminal may use any geostationary satellite located within the rotation angle of the device (often up to around 75 degrees off the center position). In most cases, the use of alternate satellites may be limited to those which support same frequency band and polarity (e.g. vertical or horizontal), as the mounting of the satellite transmitter and the low-noise block amplifier remains unchanged. However, using different frequency bands might be possible through use of much more expensive multi-band equipment (both for reception and transmission). In addition, some universal LNB types may detect the supply voltage level (e.g. 13 volts versus 18 volts) in order to control reception polarity. Similar mechanisms may exist for satellite transmitters as well, therefore allowing two-way communication over different satellites with practically no polarity limitation.

In embodiments of the invention, in addition to the VSAT and the polar mount, the remote terminal site may also include an indoor control unit (ICU) that may be connected between the VSAT and the polar mount. Such stand-alone ICU may be used in order to introduce satellite diversity capabilities to remote terminals, which do not internally support the necessary functionality for realizing such capabilities. In other embodiments, the functionality of such ICU may be embedded and/or integrated into the VSAT.

The main function of such ICU may be the transmitting of commands in DisEqC (Digital Satellite Equipment Control) protocol, or any other suitable protocol, towards the polar mount over the RF cable, which may be configured to connect the LNB to the VSAT indoor unit. In these embodiments, this cable carries DC power from the indoor unit to the LNB and RF signal from the LNB to the indoor unit. The commands towards the polar mount may be modulated over a carrier signal (e.g. 22 KHz). The polar mount may detect this modulated signal, demodulate the commands and respond to them, e.g. by rotating the antenna and aligning it at a new position.

The ICU may transmit towards the polar mount only those commands received from the VSAT, which are properly formatted and contain an appropriate id field. In order to simplify the ICU, it is possible to use polar mount models supporting a subset of the DisEqC v1.2 protocol named USALS (Universal Satellite Automatic Location System), which is unofficially known also as DisEqC v1.3. The USALS protocol utilizes a single command out of the DisEqC v1.2 protocol for driving the polar mount motor to a specified angular position (in degrees).

In another embodiment of this invention, the VSAT may measure the level of the received forward link signal and transmit this measurement to the ICU, either as a raw measurement or as an indication calculated from that measurement. The ICU may then transmit this indication to the polar mount. This indication may then be used by the polar mount for adjusting its alignment about the nominal position, maximizing the received signal level and improving the system's pointing accuracy. During installation, received signal level may be indicated visually, acoustically and/or by other means, providing an installer with a feedback on pointing accuracy and assisting him in the alignment process.

When a switchover to another satellite is initiated, the VSAT may obtain the location of the new satellite in several ways. The position may be given as part of the command that triggers the switchover procedure. In other embodiments, the position may be part of the VSAT configuration or part of its installation parameters and therefore may be retrieved from local memory. Regardless, the VSAT may then send the ICU the angle relative to a reference point at which the antenna should be rotated. The ICU may then translate this information to the DisEqC protocol and send it to the polar mount's motorized back structure over the reception coax cable. Once the antenna completes its rotation, the VSAT may program parameters of a new forward signal into its reception hardware and reestablish connectivity with the hub without any intervention from the VSAT end-user.

In reference to the external ICU embodiment, such ICU may include a micro-controller, communication ports (which may be integrated within said micro-controller), a universal LNB driver, controls for manual initiation of switchover procedure, and some indicators or a display for providing indication regarding the current status of the unit to any person at the site. The universal LNB driver may control the power supply voltage to the LNB for the purpose of signaling the desired polarity. In other embodiments, such capability may be used for accommodating long cable length installations.

The VSAT may communicate with the ICU via a communication channel such as but not limited to a serial channel. The physical signals of the serial channel may follow the RS-232 or other suitable bus standard. The VSAT may generate commands, which may include parameters. The VSAT may then sequentially send these commands over the communication channel in order to control and monitor the ICU. The protocol between the VSAT and the ICU may be based on a structural format and may contain an ICU identifier, a command code, one or more data elements and an error detection code (e.g. a 16-bit checksum).

The ICU may interrupt the VSAT via the communication channel. In embodiments where the communication channel is a serial RS-232 channel, the RTS signal may be used for this purpose. Such interruptions may occur due to any number of events, including but not limited to switching activity, internal communication failure, power reset etc. When the VSAT detects such interrupt, it may query the ICU for the interrupt cause.

An external control device, such as a personal computer (PC), a laptop computer, a PDA or any other device equipped with a suitable communication port and appropriate software may be used for installation purposes. Such a device may be connected to an auxiliary port of the ICU. The ICU may include a mechanism enabling the external control device to monitor commands and telemetry exchanged between the VSAT and the ICU. Furthermore, the ICU may include a mechanism for normally receiving commands through the auxiliary control interface and suppressing any such commands while executing a command received through the main control interface or while sending telemetry via the main control interface.

If both main and auxiliary control interfaces of the ICU are implemented as serial RS-232 communication channels, the mechanisms described above may be implemented inside the ICU as follows. The receive signal of the main control port may always be connected to the transmit signal of the auxiliary control port, allowing the external control device to receive and monitor any information sent from the VSAT towards the ICU. The receive signal of the auxiliary control port may be normally connected to the transmit signal of the main control port. As the VSAT may echo any character received, any command sent from the external control device and any response sent by the ICU to the VSAT may reach the VSAT and then be echoed back to the ICU. That way, the external control device may also monitor the information sent by the ICU and send commands to the ICU. If the ICU listens for command only on the main control port, it may not distinguish between a command originated from the VSAT and a command originated from the external control device. When the ICU has to send any information to the VSAT, it may internally disconnect the transmit signal of the main control port form the receive signal of the auxiliary port and transmit its own information. As the ICU may limit itself to receiving commands only through the main control port, this disconnection blocks the external control device from sending any commands while the ICU is engaged in exchanging information with the VSAT. It should be noted that in this embodiment the external control device may fail to communicate with the ICU when the VSAT does not echo characters being sent to it (e.g. when the VSAT is reset or powered off).

In some further embodiments of the invention, the communication channel between the VSAT and the ICU may be implemented using the coaxial cable that carries the DC power towards the LNB and the RF signal from the LNB to the VSAT. In such embodiment, both the remote terminal and the ICU may include applicable hardware for transmitting and receiving information over the coaxial cable using an appropriate protocol.

In yet further embodiments of the invention, more than one ICU may be connected at a site, supporting testing capabilities, redundancy and/or any other expansion purpose, where the communication channel is common (or concatenated) between the units. For that purpose, each ICU may have 2 identifiers, a private identifier, which may be unique per ICU device, and a global identifier, which may be shared by all VSATs. Any response by an ICU may contain the unique id.

In another aspect of this invention, the ICU may have two or more buttons, switches or other devices for user control, mounted on one or more of its exterior panels. Each such button, switch or any other control option may represent a pre-selected satellite position. The buttons, switches or other control options may be numbered and where applicable may further include light indicators or other type of display for the purpose of indicating the currently selected satellite position. The remote terminal's end-user may trigger a procedure of switching to another pre-defined satellite by pressing the appropriate button, flipping the appropriate switch or otherwise manipulating any other control option built into the ICU for this purpose. When such a procedure is triggered the ICU may send the request to the VSAT, which may have the locations of the applicable satellites stored in its memory, e.g. as part of its installation parameters or as a downloadable configuration. The VSAT may then perform the procedure as described above, causing the antenna to rotate and then establish connectivity with the hub using the satellite at the new position.

In yet another aspect of this invention, the VSAT may be commanded by the network operator to switch to another satellite. The command may include the position of the new satellite, therefore switching can be done to any satellite in view from the location of the VSAT (and not just to the predefined locations supported by any ICU hardware and calibrated during installation). The VSAT may then perform the same procedure described above. The VSAT commands the ICU, which commands the polar mount to rotate the antenna. Once the antenna is aligned according to the desired position, the VSAT may resume connectivity with the hub over the alternative satellite.

## Claims

1. A satellite communication system supporting two-way communication with a fixed location remote satellite terminal, comprising an adjustment device for automatically supporting a diversity of satellite positions for the fixed location remote satellite terminal.

2. The system of claim 1, further comprising:
a polar mount device configured to rotate an antenna of the remote satellite terminal around a single axis while maintaining alignment to a geostationary arc; and
an indoor control unit configured to receive commands form the remote terminal and communicating the commands to the polar mount according to applicable protocol.

3. The system of claim 2, further comprising a communication channel between the indoor control unit and the remote satellite terminal for at least sending commands from the remote satellite terminal to the indoor control unit and telemetry from the indoor control unit to the remote satellite terminal.

4. The system of claim 3, wherein the communication channel between the remote satellite terminal and the indoor control unit is a serial communication channel over a dedicated port.

5. The system of claim 4, wherein the communication channel between the remote satellite terminal and the indoor control unit is in accordance with the RS-232 standard.

6. The system of claim 3, wherein the communication channel between the remote satellite terminal and the indoor control unit includes a receive RF cable, wherein the RF cable carries a received RF signal from an LNB to the indoor control unit.

7. The system of claim 6, wherein the receive RF cable also carries DC power from the indoor control unit to the LNB.

8. The system of claim 3, wherein the indoor control unit performs one or more of the following:
receive a command to rotate the antenna, wherein said command also includes a parameter defining a new position of the antenna;
receive a command to obtain telemetry from the polar mount device;
receive a command to provide a malfunction cause;
modulate information on a carrier signal and sending the information to the polar mount device using an applicable protocol;
demodulate information from a signal received from the polar mount device and retrieving telemetry using an applicable protocol;
send telemetry information to the remote satellite terminal; and
signal a malfunction to the remote satellite terminal.

9. The system of claim 8, wherein commands sent by the remote satellite terminal include one or more of the following:
an indoor control unit identifier;
a command code;
one or more data elements; and
an error detection code, including any code with error correction capability.

10. The system of claim 8, wherein the new position of the antenna is expressed as an angle relative to a reference point.

11. The system of claim 10, wherein the reference point is determined according to USALS standard definitions.

12. The system of claim 8, wherein the indoor control unit signals malfunction using an interrupt signal.

13. The system of claim 12, wherein the communication channel between the remote satellite terminal and the indoor control unit is in accordance with the RS-232 standard and the interrupt signal is carried over the RTS signal.

14. The system of claim 2, wherein the protocol between the indoor control unit and the polar mount device is DisEqC or based on DisEqC in whole or in part.

15. The system of claim 14, wherein the protocol between the indoor control unit and the polar mount device is USALS.

16. The system of claim 2, further configured to:
measure received signal strength at the remote satellite terminal;
transmit signal strength measurement or indication from the remote satellite terminal to the indoor control unit;
transmit signal strength measurement or indication from the indoor control unit to the polar mount device; and
adjust antenna pointing to achieve maximal reception level.

17. The system of claim 16, further configured to present the received signal strength indication to an installer visually, acoustically, or both.

18. The system of claim 2, wherein the indoor control unit comprises one or more of:
a micro-controller or processor;
memory devices, either as stand-alone hardware or integrated within said micro-controller or processor;
communication ports, either as stand-alone hardware or integrated within said micro-controller or processor;
a universal LNB driver;
user control devices, with or without integrated visual indicators;
and visual indicators or a display unit;

19. The system of claim 18 wherein said LNB driver is configured to control DC power supply of the LNB either to signal a desired polarity, to accommodate various installation lengths, or both.

20. The system of claim 18 further comprising an auxiliary communication channel.

21. The system of claim 20, wherein said auxiliary communication channel is a serial communication channel.

22. The system of claim 21, wherein the auxiliary communication channel is a serial communication channel in accordance with the RS-232 standard.

23. The system of claim 20, further comprising connectivity between the communication channel and the auxiliary communication channel of the indoor control unit;
wherein the receive signal of the communication channel is connected to the transmit signal of the auxiliary communication channel; and
the receive signal of the auxiliary communication channel is connected to the transmit signal of the communication channel via a switch, configured to connect the two signals most of the time and break the connection when the indoor control unit transmits information to the remote satellite terminal.

24. The system of claim 23, wherein the remote satellite terminal echoes any information received from the indoor control unit on the communication channel.

25. The system of claim 24, further comprising an external control device equipped with a suitable communication port.

26. The system of claim 2, further comprising more than one indoor control unit connected to a single remote satellite terminal using a common or a concatenated communication channel.

27. The system of claim 26 wherein each indoor control unit has two identifiers and wherein the first identifier is unique for each indoor control unit.

28. The system of claim 2, wherein ICU functionality is integrated within the remote satellite terminal's indoor unit.

29. The system of claim 28, further including a communication channel between the remote satellite terminal and the polar mount device, for sending commands from the remote satellite terminal to the polar mount device and retrieving telemetry from the polar mount device to the remote satellite terminal.

30. The system of claim 29, wherein the communication channel between the remote satellite terminal and the polar mount device is a serial communication channel over a dedicated port.

31. The system of claim 30, wherein the communication channel between the remote satellite terminal and the polar mount device is in accordance with the RS-232 standard.

32. The system of claim 29, wherein the communication channel between the remote satellite terminal and the polar mount device is over a receive RF cable, configured to receive an RF signal from the LNB to the indoor control unit.

33. The system of claim 32, wherein the receive RF cable also carries DC power supply from the indoor control unit of the remote satellite terminal to the LNB.

34. The system of claim 28, wherein the protocol between the indoor control unit of the remote satellite terminal and the polar mount device is DisEqC, or based on DisEqC in whole or in part.

35. The system of claim 34, wherein the protocol between the remote satellite terminal's indoor unit and the polar mount device is USALS.

36. The system of claim 1, wherein supported satellites may be of different frequency bands, polarity, or both.

37. The system of claim 1, wherein the satellite system operates in Ku-band.

38. The system of claim 1, wherein the satellite system operates in C-band.

39. The system of claim 1, wherein the satellite system operates in Ka-band.

40. The system of claim 1, wherein the remote satellite terminal contains switchover procedure to a new satellite by one or more of:
detecting a trigger for a satellite switchover;
obtaining position information for the new satellite;
transmitting a command to external equipment connected to the remote satellite terminal, configured to align an antenna towards the new satellite.
determining that an alignment procedure is concluded and that the antenna is aligned at the desired position;
programming any necessary hardware parts with the parameters required for receiving a new forward link signal at the new satellite.
acquiring the new forward link;
receiving new parameters for a return channel; and
reestablishing two-way communication with a hub using the new satellite.

41. The system of claim 40, wherein the external equipment comprises a polar mount device, configured to rotate an antenna around a single axis while maintaining alignment to the geostationary arc; and the command sent by the remote satellite terminal for rotating the antenna is sent towards the polar mount device either directly or via an indoor control unit.

42. The system of claim 40, wherein the external equipment aligns the antenna through movement in more than one axis.

43. The system of claim 40, wherein the external equipment changes the antenna directivity through means of electrically switching of active elements.

44. The system of claim 40, wherein the external equipment changes antenna directivity through means of physically rotating or changing the positions of active elements in any direction.

45. The system of claim 40, wherein the external equipment switches between two or more statically positioned antennas.

46. The system of claim 40, wherein a trigger for the switchover procedure is a command received from a hub over the forward link.

47. The system of claim 46, wherein said command contains the new position to rotate the antenna.

48. The system of claim 46, wherein the new position to rotate the antenna is obtained from the remote satellite terminal's configuration as received from the hub and stored in the remote satellite terminal's memory.

49. The system of claim 46, wherein the new position to rotate the antenna is part of installation parameters of the remote satellite terminal and stored in non-volatile memory of the remote satellite terminal.

50. The system of claim 40, wherein the trigger for the switchover procedure is generated by a user of the remote satellite terminal through manipulation of controls.

51. The system of claim 50, wherein said controls are part of an indoor control unit connected to the remote satellite terminal.

52. The system of claim 50, wherein said controls are part of the remote satellite terminal's indoor unit.

53. The system of claim 50, wherein said controls are implemented in software through a user interface supported by the remote satellite terminal or by the indoor control unit.

54. The system of claim 50, wherein the new position to rotate the antenna is obtained from a configuration of the remote satellite terminal as received from the hub and stored in memory of the remote satellite terminal.

55. The system of claim 50, wherein the new position to rotate the antenna is part of installation parameters of the remote satellite terminal and stored in non-volatile memory of the remote satellite terminal.

56. The system of claim 1, wherein said satellite communication system supports a lottery application.

57. The system of claim 1, wherein said satellite communication system supports air traffic control communication.

58. The system of claim 1, wherein said satellite communication system backhauls wireless services.

59. The system of claim 58, wherein the wireless service is a cellular service.

60. The system of claim 59, wherein said cellular service is based on GSM technology or derivative thereof.

61. The system of claim 59, wherein said cellular service is based on CDMA technology or derivative thereof.

62. The system of claim 58, wherein the wireless service is a wireless LAN service selected from IEEE 802.11 and derivatives thereof, IEEE 802.16 and derivatives thereof, or both.

63. The system of claim 1, wherein said satellite communication system provides telephony services.

64. The system of claim 1, wherein said satellite communication system supports credit card validation services, banking applications, or both.

65. A method for two-way satellite communication with a fixed location remote satellite terminal, comprising adjusting an adjustment device for automatically supporting a diversity of satellite positions for the fixed location remote satellite terminal.

66. The method of claim 65 wherein the fixed location remote is stationary in use and transportable when not in use so as to be redeployed.
